(19) **Europäisches Patentamt**

**European Patent Office**

**Office européen des brevets**

(11) Veröffentlichungsnummer : **0 395 882 B1**

(12) # EUROPÄISCHE PATENTSCHRIFT

(45) Veröffentlichungstag der Patentschrift :
**23.12.92 Patentblatt 92/52**

(21) Anmeldenummer : **90105967.5**

(22) Anmeldetag : **29.03.90**

(51) Int. Cl.⁵ : **B61B 10/02,** B65G 23/14, B65G 19/02

(54) **Stationäre Antriebsvorrichtung in einem Schleppkreisförderer.**

(30) Priorität : **05.05.89 DE 3914763**

(43) Veröffentlichungstag der Anmeldung :
**07.11.90 Patentblatt 90/45**

(45) Bekanntmachung des Hinweises auf die
Patenterteilung :
**23.12.92 Patentblatt 92/52**

(84) Benannte Vertragsstaaten :
**AT BE CH DE DK ES FR GB GR IT LI LU NL SE**

(56) Entgegenhaltungen :
DE-A- 2 255 251
DE-U- 8 812 338
FR-A- 1 391 247
FR-A- 1 582 400
FR-A- 2 334 588
FR-A- 2 453 801

(56) Entgegenhaltungen :
GB-A- 644 228
GB-A- 2 003 812
GB-A- 2 185 610
US-A- 2 933 178

(73) Patentinhaber : **DÜRKOPP ADLER AKTIENGESELLSCHAFT**
**Nikolaus-Dürkopp-Strasse 10**
**W-4800 Bielefeld 1 (DE)**

(72) Erfinder : **Kuhlmann, Walter**
**Harnackweg 21**
**W-4937 Lage (DE)**
Erfinder : **Schneuing, Ralf**
**Wiesenstrasse 19**
**W-4446 Hörstel (DE)**

(74) Vertreter : **Rehmann, Klaus-Thorsten,
Dipl.-Ing.**
**c/o Dürkopp Adler AG, Postfach 6**
**W-4800 Bielefeld 1 (DE)**

**Beschreibung**

Die Erfindung betrifft eine stationäre Antriebsvorrichtung für auf Rollen laufende Lastträger innerhalb eines Kreisförderers nach dem Oberbegriff des Anspruchs 1.

Bei sogenannten Power-and-Free-Schleppkreisförderern werden die in einer Horizontalebene umlaufenden, auf einer endlosen Lauf- und Tragschiene geführten Lastträger von Kupplungsgliedern, die an einem über der Laufschiene geführten, ständig umlaufenden Zugmittel befestigt sind, angetrieben. Ein solcher Schleppkreisförderer ist beispielsweise in der DE-PS 29 23 890 oder der DE-OS 28 18 758 beschrieben.

Wenn die Lastträger ihren Zielbestimmungsort erreicht haben, werden sie aus dem Hauptförderkreis herausgeschleust, um das von ihnen transportierte Fördergut abnehmen zu können. Neu beladene Lastgutträger müssen analog dazu vom Nebenförderkreis in den Hauptförderkreis eingeschleust werden.

Diese Nebenförderkreise sind über Weichen mit dem Hauptförderkreis verbunden, müssen aber über separate, die Lastgutträger antreibende Zugmittel verfügen. In bekannten Schleppkreis-Förderanlagen sind die Kupplungsglieder im Nebenkreis in Laufrichtung der Lastträger starr und in Gegenrichtung schwenkbar am Zugmittel befestigt, so daß das Zugmittel zum Antrieb der Lastträger nicht permanent umlaufen muß, sondern oszillierende Bewegungen ausführen kann, wobei während der Bewegung in Transportrichtung die Lastträger angeschoben werden und in Gegenrichtung die Kupplungsglieder dem Lastträger ausweichen und über ihn zurückgeführt werden können.

Beim Einschleusen in den Hauptkreis ist es notwendig, den in aller Regel in Ruhestellung befindlichen Lastträger zum richtigen Zeitpunkt zu beschleunigen, damit er in eine freie Position im Hauptförderkreis einlaufen kann. Wichtig ist, daß der Lastträger mit derselben Geschwindigkeit wie das umlaufende Zugmittel in den Hauptförderkreis einläuft, damit eine übergangsfreie Antriebsbewegung möglich ist, wenn der Lastträger im Hauptförderkreis von den Kupplungsgliedern erfaßt und angeschoben wird.

Da im Nebenförderkreis keine kontinuierliche Antriebsbewegung stattfindet, ist bei dieser Lösung kein einwandfreier Betrieb gewährleistet. Beim Beschleunigen der Lastträger geraten diese in Schwingbewegung, wobei die Intensität von der jeweiligen Beladung bzw. dem jeweiligen Gewicht des Lastträgers abhängig ist. Da jeder Lastträger unterschiedlich beladen ist, wird außerdem keine reproduzierbare Geschwindigkeit zum Zeitpunkt der Übergabe in den Hauptförderkreis erreicht. Im Extremfall kann das Ausschwenken sogar dazu führen, daß Teile des Fördergutes, beispielsweise auf Bügeln hängende Kleidungsstücke, während des Einschleusens vom Lastträger herunterfallen. Bei der immer weiter fortschreitenden Automatisierung und der damit einhergehenden fehlenden Eingriffsmöglichkeit durch das Bedienpersonal ist dies ein nicht hinnehmbarer Zustand.

Man ist deshalb dazu übergegangen, vor der Übergabestelle (Weiche) im Nebenförderkreis eine stationäre Antriebsvorrichtung für die Lastträger vorzusehen.

Diese Antriebsvorrichtung ist über der Lauf- und Tragschiene angeordnet und weist einen fremdangetriebenen, vertikal umlaufenden Gurt auf, der im Reibschluß auf die Laufrollen des jeweils unter ihm eingefahrenen Lastträgers einwirkt (vergleiche DE-OS 22 55 251).

Nachteilig an dieser Antriebsvorrichtung ist einerseits, daß das erwähnte Beschleunigungsaufschaukeln nur durch konstruktiv aufwendige Änderungen und zusätzliches Anbringen von Führungshilfen an der Lauf- und Tragschiene verhindert werden kann, andererseits zeigt sich immer wieder, daß bei schwerer beladenen Lastträgern der Schlupf zwischen Treibgurt und Laufrolle so weit ansteigt, daß die zum fehlerfreien Eingleisen notwendige Übergabegeschwindigkeit gar nicht erreichbar ist. Es ist also nicht auszuschließen, daß sich die Lastträger aufgrund der ruckartigen weiteren Beschleunigung im Hauptförderkreis zusätzlich aufschaukeln.

Aus der zur Gattungsbildung herangezogenen US-PS 2,933,178 ist eine stationäre Antriebsvorrichtung bekannt, die zum Antrieb eines aus einer Vielzahl von aneinander gekuppelten Förderträgern zu einem geschlossenen Förderkreis vereinigten Hängeförderers dient.

Um ihrer Funktion gerecht zu werden, muß diese Antriebsvorrichtung kontinuierlich betrieben werden. Eine Verwendung zum Einschleusen der Förderträger von einem Nebenförderkreis in einen Hauptförderkreis ist nicht vorgesehen.

Der Erfindung liegt daher die Aufgabe zugrunde, eine gattungsgemäße stationäre Antriebsvorrichtung so fortzubilden, daß mit ihr ein einwandfreies Eingleisen der Lastträger eines Schleppkreisförderers vom Neben- in den Hauptstrang möglich ist, diese in bereits bestehende Förderanlagen integriert werden kann, einfach aufgebaut und kostengünstig herstellbar ist.

Die Lösung der Aufgabe erfolgt erfindungsgemäß durch die kennzeichnenden Merkmale des Anspruchs 1.

Durch das parallele Anordnen zweier gleichsinnig antreibbaren Gurte, die einen eingelaufenen Lastträger beidseitig reibschlüssig (kraftschlüssig) erfassen, ist nicht nur eine einwandfreie kontinuierliche Beschleunigung des Lastträgers aus der Ruhelage möglich, sondern gleichzeitig ist während der Beschleunigung auch eine einwandfreie Führung des Lastträgers gewährleistet, so daß ein Aufschaukeln wirkungsvoll verhindert wird.

Da Antrieb und Führung eine Baueinheit sind, ist der Einsatz der Antriebsvorrichtung an jeder beliebigen Stelle innerhalb des Förderstranges möglich. Wenn die Antriebsvorrichtung an bzw. vor der Umladestelle angeordnet und zusammen mit einer Umladevorrichtung, wie sie die DE-PS 25 37 442 offenbart, betrieben wird, kann das Umladen der Bügel vom Lastträger vollautomatisch gesteuert erfolgen, da etwaige Schwenkbewegungen, die ein Abgleiten einzelner Bügel verhindern könnten, mit Sicherheit ausgeschlossen werden.

Die Maßnahme nach Anspruch 2 stellt sicher, daß die Gurte mit der gleichen Geschwindigkeit und über einen einzigen Antriebsmotor betreibbar sind.

Durch die Maßnahme nach Anspruch 3 ist sichergestellt, daß eine ausreichende Kraft von den Gurten auf den eingelaufenen Lastträger ausübbar ist, so daß ein möglichst schlupffreier Betrieb erfolgt.

Die Gurtspanner mit den Merkmalen nach Anspruch 3 bzw. Anspruch 4 vereinfachen den Aufbau der Antriebsvorrichtung auf wirkungsvolle Weise und sorgen außerdem für eine gleichmäßige Anpreßkraft der Gurte auf die Förderträger.

Durch die Verwendung von Gurten mit unterschiedlichen Reibungskoeffizienten an der Vor- und Rückseite nach Anspruch 5 ist sichergestellt, daß der Lastträger möglichst schlupffrei beschleunigt werden kann (hoher Reibbeiwert) gleichzeitig aber keine allzu hohe Verlustleistung durch die Reibung der Gurte am Gurtspanner (niedriger Reibbeiwert) auftritt.

Mit Hilfe einer Zeichnung soll die Erfindung näher beschrieben werden.

Es zeigt:

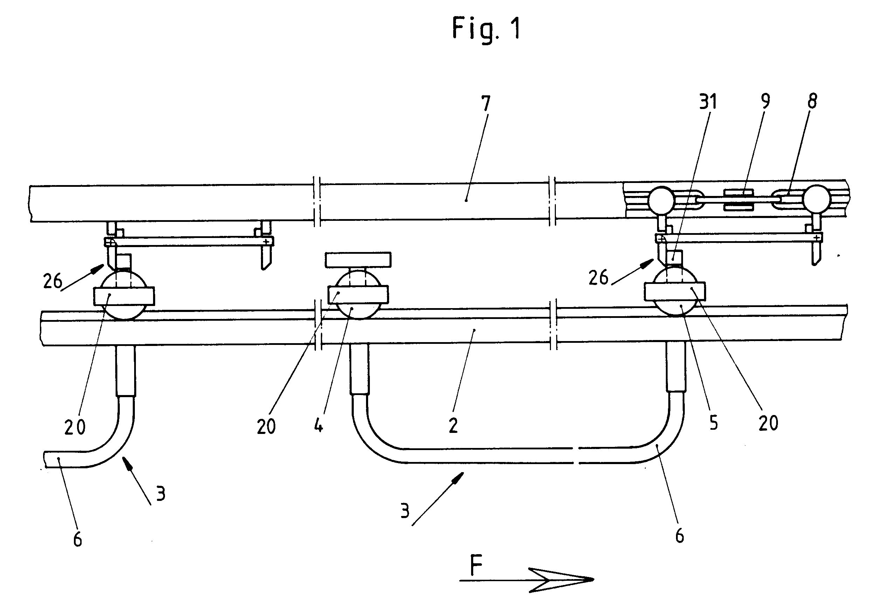

Fig. 1 die schematische Darstellung eines Teils des Förderstranges in Seitenansicht,

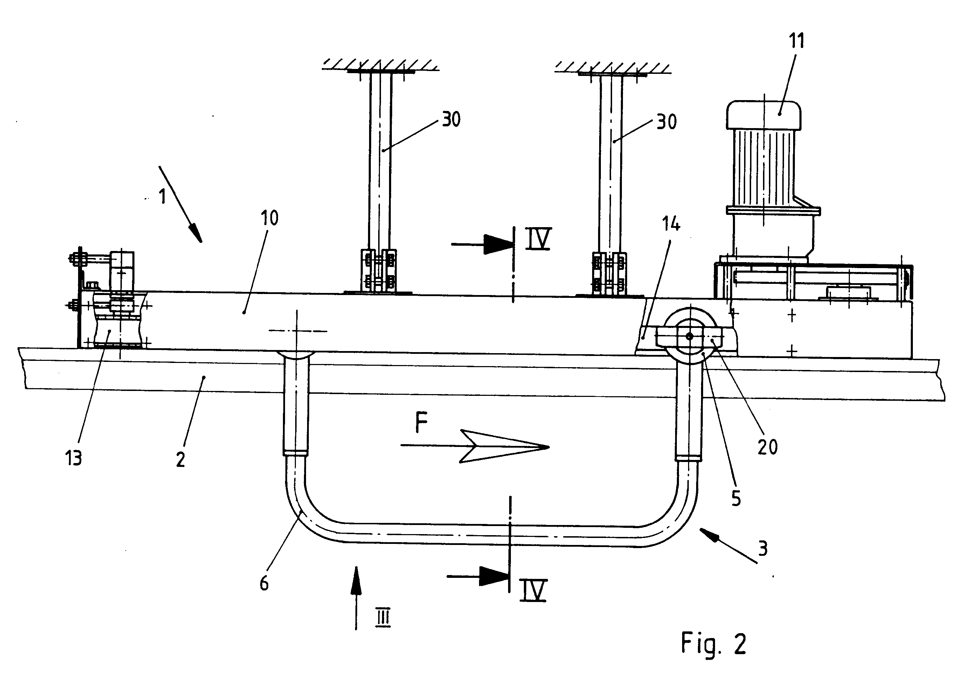

Fig. 2 die Seitenansicht der Antriebsvorrichtung,

Fig. 3 die Ansicht der Antriebsvorrichtung gemäß Sichtpfeil III nach Fig. 2,

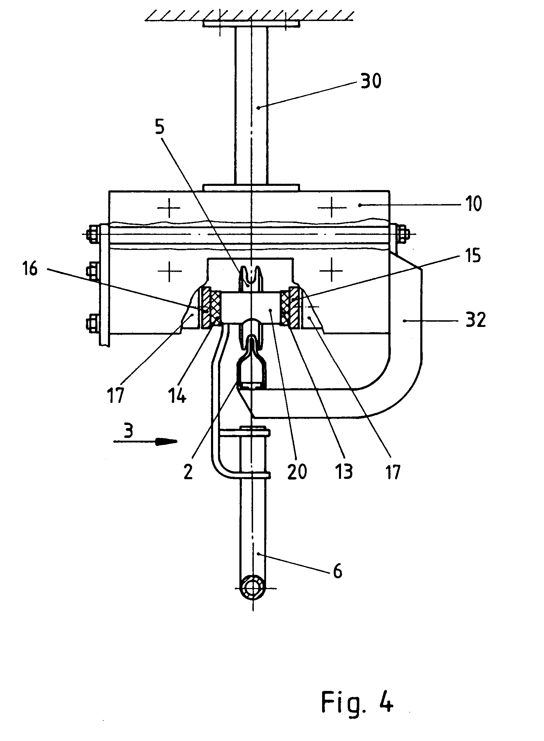

Fig. 4 den Querschnitt der Antriebsvorrichtung entlang der Schnittlinie IV-IV nach Fig. 2,

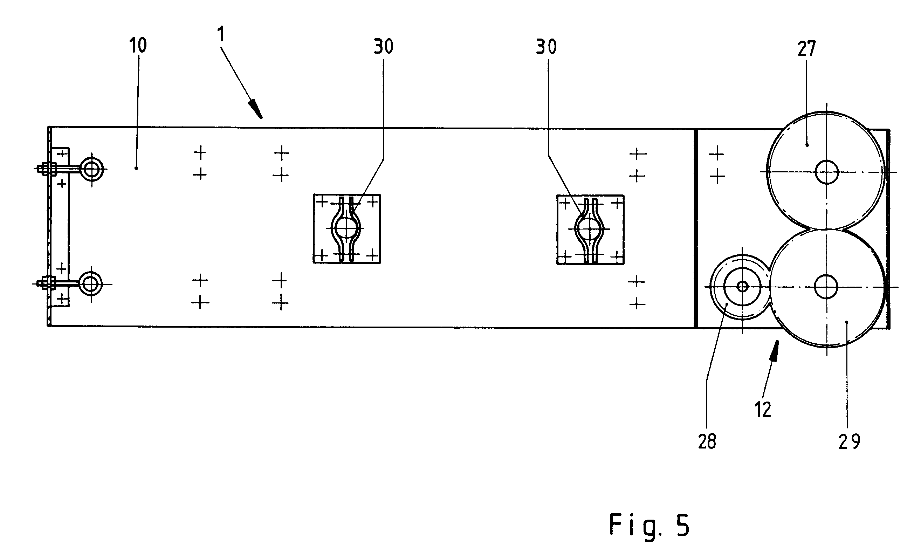

Fig. 5 die Draufsicht der Antriebsvorrichtung ohne angeflanschten Antriebsmotor,

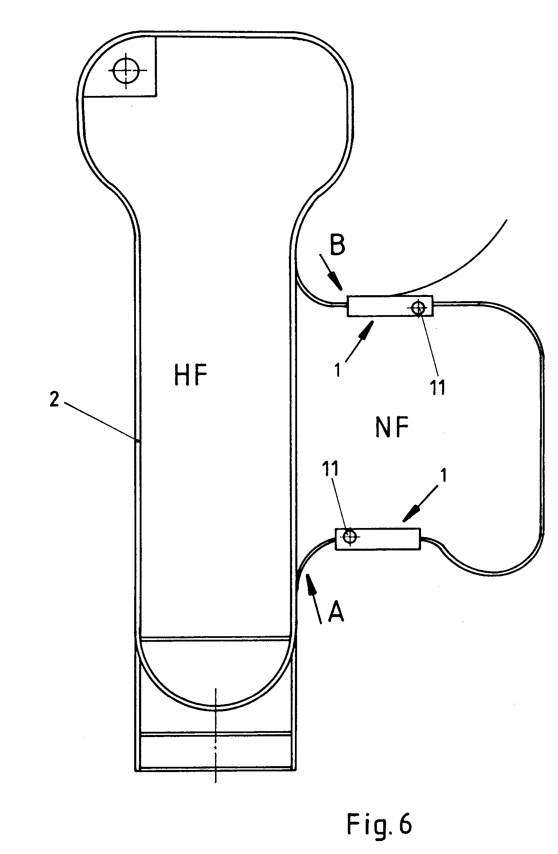

Fig. 6 die rein schematische Draufsicht auf eine Schleppkreisförderanlage mit der Einschleusstelle A und der Abladestelle B.

In einer sogenannten Power-and-Free-Schleppkreisförderanlage werden beispielsweise auf Bügeln hängende Kleidungstucke, die zu mehreren zusammengefaßt ihrerseits in die Lastträger 3 eingehängt sind, innerhalb eines Konfektionierbetriebes von einem Arbeitsplatz zum anderen transportiert.

Die bekannten Lastträger 3 sind durch zwei Rollen 4,5 in der Lauf- und Tragschiene 2 verschiebbar angeordnet. In den Bügel 6 der Lastträger 3 können die Kleiderbügelhaken eingehängt werden. Über der Lauf- und Tragschiene 2 ist ein Kettenkanal 7 angeordnet, in dem die Antriebskette 8 über Rollen 11 geführt ist. An der Antriebskette 8 sind in bekannter Weise Kupplungsglieder 26 befestigt, die mit entsprechend ausgestalteten Gegengliedern 31 an den Lastträgern 3 zusammenwirken. Im Hauptförderstrang HF ist die Antriebskette 8 endlos und ständig umlaufend ausgeführt, so daß die Lastträger permanent und kontinuierlich transportiert werden können.

Im Nebenförderstrang NF wird die Antriebskette 8 oszillierend betrieben. Die Kupplungsglieder 26 sind dann so ausgestaltet, daß sie bei einer der Förderrichtung F entgegengerichteten Bewegung über die Rollen 4, 5 der Lastträger hinweg geführt werden können, ohne daß eine Transportbewegung stattfindet.

Im Nebenförderstrang NF ist an der Eingleisstelle A bzw. der Abladestation B zusätzlich zu der oszillierenden Antriebskette 8 oberhalb der Lauf- und Tragschiene 2 die erfindungsgemäße Antriebsvorrichtung 1 angeordnet, deren Aufbau und Funktionsweise nachfolgend beschrieben wird. Die über die Trägerelemente 30 ortsfest - beispielsweise unter der Hallendecke - befestigte Antriebsvorrichtung 1 besteht im wesentlichen aus dem Gehäuse 10, dem darauf angeflanschten Antriebsmotor 11, den über ein Getriebe 12 miteinander und dem Antriebsmotor 11 verbundenen Gurten 13, 14 sowie den Gurtspannern 15, 16 und ist so angeordnet, daß beide Gurte 13, 14 gleichzeitig in Eingriff mit einem Lastträger 3 bringbar sind.

Die Gurte 13, 14 sind jeweils über zwei Rollen 21, 22 bzw. 23, 24 geführt, wobei die Rollen 21 und 23 über eine hier nicht näher dargestellte Welle mit den ineinander kämmenden Zahnrädern 28, 29 verbunden sind. Das Zahnrad 29 steht in Eingriff mit dem vom Antriebsmotor 11 treibbaren Zahnrad 27. Durch das aus den Zahnrädern 27,28,29 gebildete Getriebe 12 ist sichergestellt, daß sich die einander gegenüberliegenden Trums der Gurte 13a, 14a mit derselben Geschwindigkeit in dieselbe Richtung transportiert werden. Die Rollen 21, 23 bzw. 22, 24 sind innerhalb des Gehäuses in einem solchen Abstand parallel zueinander angeordnet, daß zwischen ihnen mit geringem Spiel die Laufrollen 4, 5 der Lastträger 3 hindurchlaufen können.

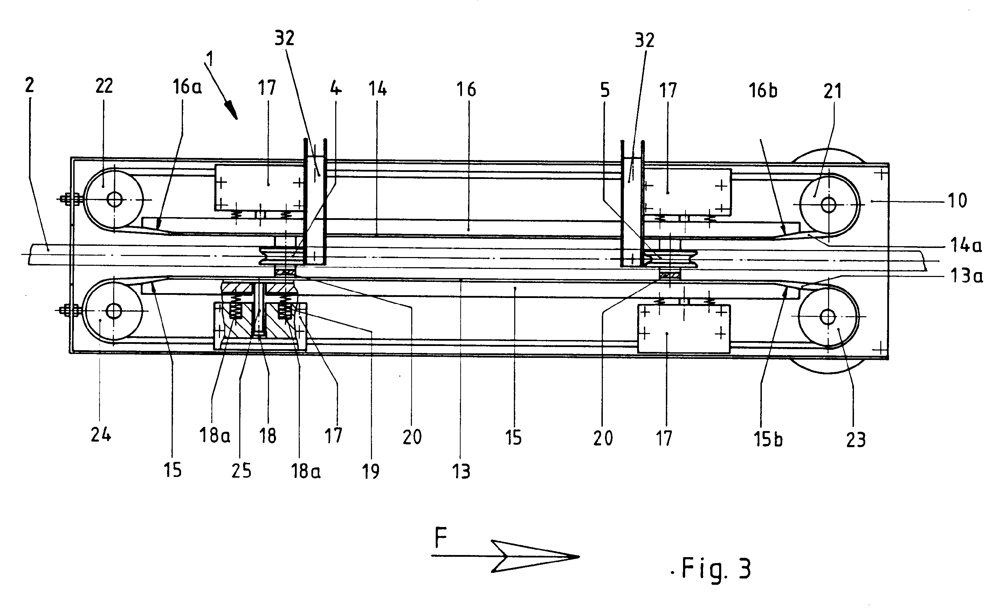

Zum Vorspannen der einander gegenüberliegenden Trums der Gurte 13, 14 ist je ein Gurtspanner 15 bzw. 16 vorgesehen. Die Gurtspanner 15, 16 verlaufen entlang der Rückseite jedes Gurtes 14, 15 und sind zwischen den Rollen 21 und 22 bzw. 23 und 24 über den fast vollständigen Längsabstand zwischen den Rollen ausgeführt. Die Gurtspanner 15, 16 weisen an ihren beiden Längsenden Abschrägungen 15a, b; 16a, b auf, wodurch eine kontinuierliche Abstandsverringerung der Gurte in Richtung des Inneren der Antriebsvorrichtung 1 gewährleistet ist, so daß aus dem Spiel, das zwischen den Laufrollen 4, 5 der Lastträger und den Gurten 13, 14 am Ein- bzw. Ausgang der Antriebsvorrichtung vorhanden ist, langsam reduziert und in eine Anpressung der Gurte 13, 14 an die Laufrollen 4, 5 bzw. der Laufrollenträger 20 übergeht (Fig. 3).

Jeder der Gurtspanner 15, 16 ist mit zwei Spannelementen 17 versehen, die ihrerseits mit dem Gehäuse 10 fest verbunden sind. Jedes Spannelement 17 besteht seinerseits aus einem Gehäuse 17a, das mit dem Gehäuse 10 der Antriebsvorrichtung 1 verschraubt ist. Das Gehäuse 17a weist eine nicht durchgängige Bohrung 18 auf, in der ein Bolzen 25 geführt ist. Der Bolzen 25 ist länger als die Sackbohrung 18 und ist einenends mit dem Gurtspanner 15, 16 verbunden. In wenigstens zwei weiteren, symmetrisch um die Bohrung 18 in das Gehäuse 17a angebrachten Sacklöchern 18a sind in jedem Spannelement 17 wenigstens zwei über die Sacklöcher 18a hervorstehende Druckfedern 19 vorgesehen, die sich mit ihrem einen Ende am Boden der Sacklöcher 18a und mit ihrem anderen Ende am Gurtspanner 15, 16 abstützen, so daß die Gurtspanner 15 bzw. 16 dem Trum 13a bzw. 14a der Gurte 13 bzw. 14 eine Vorspannung verleihen. Für den Fachmamn ist es klar, daß durch entsprechende Auswahl der Druckfeder 19 und des Gurtmaterials die Vorspannung einstellbar ist. Wichtig ist, daß den Gurten 13, 14 eine solche Vorspannung verliehen wird, daß der Abstand zwischen den Gurttrums 13a, 14a kleiner ist als die Breite des Laufrollenträgers 20, so daß jeder Gurttrum 13a, 14a an den Laufrollenträgern 20 zur Anlage gelangt und sich zwischen den Laufrollenträgern 20 und dem jeweiligen Gurttrum 13a, 14a eine reibschlüssige Verbindung einstellen kann.

Die Funktionsweise der im Nebenförderstrang NF untergebrachten Antriebsvorrichtung 1 ist die folgende:

Der Antriebsmotor 11 wird rechnerunterstützt ein- und ausgeschaltet, so daß die Antriebsvorrichtung 1 immer zu definierten Zeitpunkten, die nicht regelmäßig beabstandet zu sein brauchen, in Funktion ist. In Transportrichtung vor der Antriebsvorrichtung 1 ist ein hier nicht näher gezeigter Schalter angeordnet, durch den die Antriebsvorrichtung 1 für eine bestimmte Zeit zusätzlich eingeschaltet wird, wenn ein Lastträger den Schalter passiert. Über die oszillierende Bewegung der Antriebskette 8 werden die Lastträger in herkömmlicher Weise durch den Nebenstrang gefördert. Kurz bevor ein Lastträger 3 in die Antriebsvorrichtung 1 einläuft, wird der Antriebsmotor 11 über den erwähnten Schalter eingeschaltet, so daß eine möglichst geringe Gleitreibung zwischen dem Laufrollenträger 20 des einlaufenden Lastträgers 3 und den Gurttrums 13a, 14a stattfindet. Die Antriebsvorrichtung 1 bleibt so lange in Betrieb, bis der Förderträger 3 vollständig eingelaufen ist. Wenn sich im Hauptförderstrang HF ein freier Platz im Antriebsstrang der Eingleisstelle nähert, schaltet die Rechnersteuerung den Antriebsmotor 11 erneut ein und der förderträger 3 erfährt über die an seinen Laufrollenträgern 20 angreifenden Gurte eine gleichmäßige Beschleunigung. Wenn die Endgeschwindigkeit der Antriebsvorrichtung 1 mit der Umlaufgeschwindigkeit der Antriebskette 8 synchronisiert ist, läuft der Lastträger 3 mit exakter Fördergeschwindigkeit in den Hauptstrang ein. Durch die beidseitig der Laufrollenträger 20 angreifenden Gurte wird der Lastträger 3 gleichzeitig exakt geführt, so daß das Aufschaukeln während der Beschleunigung wirkungsvoll verhindert wird. Um die Lagestabilität der Antriebsvorrichtung 1 zu erhöhen, sind zusätzlich zu den Trägern 30 seitlich am Gehäuse 10 zwei L-förmig gebogene Winkeleisen 32 angeschraubt, deren einer Schenkel die Antriebsvorrichtung 1 von unten hintergreift und starr mit der Lauf- und Tragschiene 2 verbunden, zum Beispiel verschraubt ist. Dabei ist insbesondere bemerkenswert, daß bei nahe genug an der Übergabestelle A angeordneter Antriebsvorrichtung 1 ein Teil des Lastträgers 3 schon in den Hauptförderstrang HF eingelaufen ist und bereits über das umlaufende Zugmittel 8 bzw. ein sich in Eingriff befindliches Kupplungsglied angetrieben werden kann, während der andere Teil des Lastträgers 3 die Antriebsvorrichtung 1 noch nicht verlassen hat.

In derselben Art und Weise erfolgt der Antrieb beim automatischen Abladen der Lastträger 3. Da die Lastträger entweder gleichmäßig beschleunigt oder aber mit konstanter Geschwindigkeit (abhängig von der Anordnung vor der Abladestelle B, bzw. der Gesamtlänge der Antriebsvorrichtung 1) an der bekannten (hier nicht gezeigten) Umladevorrichtung vorbeigeführt werden, ist ein Verklemmen der auf dem Förderträger 3 hängenden Kleiderbügelhaken wirkungsvoll ausgeschlossen.

Es ist selbstverständlich, daß die Antriebsgurte 13, 14 nicht zwingend endlos umlaufend ausgebildet sein müssen, sondern es ist ebenso oszillierender Betrieb denkbar, ohne daß die Funktionsfähigkeit der Antriebseinrichtung beschränkt wäre oder der Erfindungsgedanke verlassen würde.

**Patentansprüche**

1. Stationäre Antriebsvorrichtung für innerhalb eines Schleppkreisförderers auf Rollen (4, 5) laufende Lastträger (3), wobei die Antriebsvorrichtung (1) oberhalb der für die Lastträger (3) vorgesehenen Laufschiene (2) angeordnet ist, die Lastträger (3) in die Antriebsvorrichtung (1) einlaufen und als Antriebsmittel zwei gleichsinnig antreibbare, in einem parallelen Abstand zueinander angeordnete Gurte (13, 14) vorgesehen sind, deren Abstand zueinander so gewählt ist, daß sich zwischen jedem der Gurte (13, 14) und einem eingelaufenen Lastträger (3) eine reibschlüssige Verbindung einstellt,
dadurch gekennzeichnet, daß
die Antriebsvorrichtung (1) zum Eingleisen der Lastträger (3) von einem Nebenförderstrang (NF) in einen Hauptförderstrang (HF) dient und sowohl rechnergesteuert so ein- und ausschaltbar ist, daß sie zu definierten Zeitpunkten in Betrieb ist als auch in Reaktion des Passierens eines Lastträgers (3) eines vor der Antriebsvorrichtung (1) angeordneten Schalters für eine bestimmte Zeitdauer einschaltbar ist, um den Lastträger (3) in der Antriebsvorrichtung (1) zu positionieren.

2. Stationäre Antriebsvorrichtung nach Anspruch 1, dadurch gekennzeichnet, daß die Antriebsrollen (21, 23) der Gurte (13, 14) über ein Getriebe (12) starr verbunden sind.

3. Stationäre Antriebsvorrichtung nach Anspruch 1, dadurch gekennzeichnet, daß für jeden Gurt (13, 14) wenigstens ein Gurtspanner (15, 16) zur Vorspannung der sich gegenüberliegenden Trümer (13a bzw. 14a) der Gurte (13 bzw. 14), vorgesehen ist und die Gurtspanner (15, 16) gebildet werden durch eine an der Rückseite der Gurttrümer (13a, 14a) über die nahezu vollständige Länge verlaufende Schiene, die sich über wenigstens zwei Druckfedern (19) am Gehäuse (10) abstützt.

4. Stationäre Antriebsvorrichtung nach Anspruch 3, dadurch gekennzeichnet, daß vor den Antriebs- (21, 23) und Führungsrollen (22, 24) innerhalb der Gurtschleifen jeweils ein Spannelement (17) gehäusefest angeordnet ist, wobei innerhalb jedes Spannelements (17) ein in einer Bohrung (18) geführter Bolzen (25) vorgesehen ist, der mit seinem einen Ende mit dem Gurtspanner (15, 16) in Wirkverbindung steht, und symmetrisch um den Bolzen (25) verteilt wenigstens zwei sich am Gehäuse (17a) und dem Gurtspanner (15, 16) abstützende Druckfedern (19) angeordnet sind.

5. Stationäre Antriebsvorrichtung nach Anspruch 1, dadurch gekennzeichnet, daß die Gurte (13, 14) an ihrer Vor- und Rückseite unterschiedliche Reibungskoeffizienten aufweisen.

**Claims**

1. A stationary driving device for load-bearing units (3) on rollers (4, 5) within an endless conveyor, in which the said driving device (1) is arranged above the roller rail (2) for the load-bearing units, said load-bearing units (3) entering the driving device (1), and has as a driving mechanism two belts (13, 14) which can be propelled in the same direction and which are arranged parallel to each other at such a distance apart as to derive a frictional connection between each of the belts (13, 14) and a load-bearing unit (3) which has entered the device, characterized in that the driving device (1) which serves to rerail the load-bearing unit (3) from a secondary conveying track (NF) to the main conveying track (HF) is computer-controlled to enable it to be turned on and off such that it is in operation at defined times and, consequent upon the load-bearing unit passing a switch in front of the driving device (1), may be switched on for a given period of time to position the load-bearing unit (3) in the driving device (1).

2. A stationary driving device in accordance with Claim 1, characterized in that the drive rollers (21, 23) of the belts (13, 14) are rigidly connected to each other via a set of gears.

3. A stationary driving device in accordance with Claim 1, characterized in that for each belt (13, 14) at least one belt tensioner (15, 16) is envisaged for the prior tensioning of the opposing strands (13a or 14a) of the belts (13 or 14), and that the belt tensioners (15, 16) are formed by a rail extending almost the entire length of the reverse side of the strands and which is braced against a casing (10) by at least two compression springs (19).

4. A stationary driving device in accordance with Claim 3, characterized in that one tensioning unit (17) is rigidly fixed within the belt loops to the casing anterior to the drive rollers (21, 23) and guide rollers (22, 24), whereby a bolt (25) is fixed within a borehole (18) in each tensioning unit (17) having one end in operative connection with the belt tensioner (15, 16) and having at least two compression springs (19) symmetrically distributed around said bolt (25) and braced against the casing (17a) and the belt tensioner (15, 16).

5. A stationary driving device in accordance with Claim 1, characterized in that the belts (13, 14) have differing coefficients of friction on their front and rear sides.

**Revendications**

1. Dispositif stationnaire d'entraînement pour porte-charges (3) circulant sur des rouleaux (4, 5) à l'intérieur d'un transporteur sans fin, étant entendu que le dispositif d'entraînement (1) est disposé au-dessus du rail de circulation (2) prévu pour les porte-charges (3), que les porte-charges (3) entrent dans le dispositif d'entraînement (1) et qu'on a prévu, comme moyen d'entraînement, deux courroies (13, 14), disposées parallèlement, à une certaine distance l'une de l'autre, et entraînées dans le même sens, dont la distance est choisie de telle façon qu'il s'établisse une liaison par frottement entre chacune des courroies (13, 14) et l'un des porte-charge (3) entrant, caractérisé en ce que le dispositif d'entraînement (1) sert à enrailler les porte-charge (3), depuis une ligne de transporteur annexe (NF), dans une ligne principale de transporteur (HF), et en ce qu'il peut aussi bien être enclenché ou déclenché par commande par calculateur, de façon à être mis en service à des instants prédéterminés, qu'être également enclenché, pour une durée déterminée, sous l'effet d'un interrupteur disposé en avant du dispositif d'entraînement (1) et réagissant au passage d'un porte-charge (3), pour positionner les porte-charge (3) dans le dispositif d'entraînement (1).

2. Dispositif stationnaire d'entraînement suivant la revendication 1, caractérisé en ce que les rouleaux d'entraînement (21, 23) des courroies (13, 14) sont reliés de façon rigide par l'intermédiaire d'un jeu d'engrenages (12).

3. Dispositif stationnaire d'entraînement suivant la revendication 1, caractérisé en ce que, pour chacune des courroies (13, 14), il est prévu au moins un tendeur de courroie (15, 16), pour soumettre à une prétension les brins (respectivement 13a, 14a), qui se font face, des courroies (13, 14) et en ce que les tendeurs de courroie (15, 16) sont formés d'un rail disposé sur la face arrière des brins de courroies (13a, 14a), presque sur toute leur longueur, ce rail s'appuyant sur le bâti (10) par l'intermédiaire d'au moins deux ressorts de pression (19).

4. Dispositif stationnaire d'entraînement suivant la revendication 3, caractérisé en ce qu'en avant des rouleaux d'entraînement (21, 23) et des rouleaux de guidage (22, 24) est chaque fois disposé, à l'intérieur des boucles formées par les courroies, un organe de tension (17), solidaire du bâti (10), étant entendu qu'un axe (25), guidé dans un alésage (18), est prévu à l'intérieur de chacun des organes de tension (17) et agit par l'une de ses extrémités sur le tendeur de courroie (15, 16), et qu'au moins deux ressorts de pression (19) sont disposés, symétriquement par rapport à l'axe (25), et prennent appui sur le bâti (17a) et le tendeur de courroie (15, 16).

5. Dispositif stationnaire d'entraînement suivant la revendication 1, caractérisé en ce que les courroies (13, 14) présentent sur leurs faces avant et arrière des coefficients de frottement différents.

Fig. 1

Fig. 2

EP 0 395 882 B1

.Fig. 3

EP 0 395 882 B1

Fig. 4

Fig. 5

Fig. 6